Europäisches Patentamt

European Patent Office

Office européen des brevets

(19)

(11) Numéro de publication: **0 236 191 B1**

(12) **FASCICULE DE BREVET EUROPEEN**

(45) Date de publication du fascicule du brevet:
**11.10.89**

(51) Int. Cl.⁴: **B65G 1/137**

(21) Numéro de dépôt: **87400248.8**

(22) Date de dépôt: **03.02.87**

(54) **Installation industrielle de stockage et de distribution de produits à grande échelle.**

(30) Priorité: **04.02.86 FR 8601521**

(43) Date de publication de la demande:
**09.09.87 Bulletin 87/37**

(45) Mention de la délivrance du brevet:
**11.10.89 Bulletin 89/41**

(84) Etats contractants désignés:
**BE DE GB IT NL**

(56) Documents cités:
**FR-A- 1 339 922**
**FR-A- 1 515 822**
**US-A- 2 672 289**
**US-A- 4 419 734**

(73) Titulaire: **SEBTY, Le Pont d'Anché Anche,
F-86700 Couhe(FR)**

(72) Inventeur: **Terny, Michel Résidence Les Terrasses,
Bâtiment F 10, Chemin des Gorges, F-69570 Dardilly(FR)**

(74) Mandataire: **Plaçais, Jean-Yves et al, Cabinet
Netter 40, rue Vignon, F-75009 Paris(FR)**

ACTORUM AG

## Description

L'invention concerne les installations industrielles de stockage et de distribution de produits, à grande échelle.

Il est maintenant connu de réaliser des ateliers spécialisés dans la préparation de commandes. Leur but est qu'un opérateur puisse réunir rapidement tous les colis faisant partie d'une commande.

De telles installations comportent, dans un local, des rangées de moyens de stockage possédant une face avant tournée vers le passage de l'opérateur (distribution des produits stockés) et une face arrière permettant le réapprovisionnement des produits stockés.

Les moyens de stockage eux-mêmes consistent en un arrangement (bidimensionnel le plus souvent) de casiers de stockage dynamique. Chacun de ces casiers possède un chemin, propre à transporter des colis en file, de l'arrière vers l'avant, en principe par roulement. On comprendra que chaque colis contient un produit, en quantité prédéterminée, en correspondance avec le casier concerné.

Des installations de ce genre sont utilisées pour les stocks de distribution dans les magasins et entrepôts, les stocks d'usines de production ou de conditionnement, ou encore pour les centres de distribution dans des domaines très divers: alimentaire, pharmaceutique, cosmétique, textile, composants électroniques ou électromécaniques, produits chimiques, éditions, ventes par correspondance, notamment.

Leur but est donc de permettre à un préparateur de réunir les différents produits faisant l'objet d'une commande, de façon à les expédier rapidement, et en totalité.

Cela suppose que le stock soit, en permanence, suffisamment approvisionné. Il faut donc détecter suffisamment tôt quels produits sont près de la rupture de stock.

Actuellement ceci peut se faire de plusieurs manières.

Une fiche est jointe à un colis, judicieusement placé, au moment du remplissage des casiers par l'arrière. Quand cete fiche est découverte par le préparateur (de commandes), c'est que le stock s'épuise. Cette méthode, manuelle, laisse entier le problème de transmettre l'information à qui de droit, afin d'obtenir le réapprovisionnement suffisamment vite pour ne pas se trouver en rupture de stock. De plus, il n'est pas simple de "gérer" ces fiches, ni de les placer au bon endroit dans chaque casier dynamique, surtout lorsque la profondeur de ceux-ci dépasse deux mètres.

A côté de cela, ou en complément, on prévoit souvent des rondes de contrôleurs, qui examinent tous les casiers en notant à chaque fois, sur place, le niveau approximatif des stocks. Cette solution, onéreuse en personnel, est également lente et imprécise; il est souvent difficile d'évaluer le stock d'un casier par l'arrière, l'avant étant naturellement réservé aux préparateurs de commande. De surcroît, il se manifeste un grand décalage entre l'obervation visuelle du stock minimal et la transmission de cette information, en particulier si le nombre de casiers à surveiller est important. Enfin, si la demande de réapprovisionnement n'est pas suivie d'effet, on risque que personne ne s'en aperçoive avant la rupture de stock constatée par les préparateurs au moment où ils ont besoin des produits.

Il est également connu d'effectuer une gestion de stock sur ordinateur. Malheureusement, il s'agit d'un stock théorique, car on ne connaît pas, ou pas bien, les sorties des produits en temps réel, les vitesses de travail des préparateurs, les commandes non exécutées pour des raisons diverses. En d'autres termes, le stock n'est déterminable qu'en temps différé. D'ailleurs, un tel traitement informatique du stock n'est souvent fait qu'une fois par jour, d'où il résulte un décalage avec la réalité, au moins en cours de journée.

Ces solutions, très imparfaites, ne donnent pas satisfaction, et ce, d'autant plus que l'on a pu maintenant augmenter considérablement les vitesses de travail des préparateurs :
- en mode manuel pur: jusqu'à 100 à 150 lignes d'un bordereau de commande par heure et par personne;
- en mode assisté, par affichage numérique des quantités à prélever, jusqu'à 600, 800, voire 1200 lignes par heure et par personne, suivant les produits.

Il existe donc un besoin urgent de trouver une solution satisfaisante, faute de quoi les capacités de stockage de l'installation devraient être substantiellement augmentées, ou alors la productivité chute considérablement, si l'on ne veut pas livrer des commandes incomplètes.

La présente invention a pour but d'apporter une solution à ce problème.

Un autre but de l'invention est de fournir un dispositif souple à l'usage, c'est-à-dire permettant d'une manière simple tous les réglages requis, selon les colis et produits stockés dans chaque casier.

L'invention a aussi pour but de résoudre le problème précité en utilisant des moyens qui soient simples et peu onéreux, et en même temps capables de tenir en ambiance industrielle.

L'invention part d'une installation du type précité, c'est-à-dire comportant, dans un local, des rangées de moyens de stockage possédant une face avant tournée vers un passage de distribution des produits stockés, et une face arrière permettant le réapprovisionnement en produits stockés; les moyens de stockage eux-mêmes consistant en un arrangement, bidimensionnel en particulier, de casiers de stockage dynamique dont chacun se présente comme un couloir, qui possède un chemin propre à transporter par gravité, de l'arrière vers l'avant, en file, des colis contenant chacun une quantité prédéterminée d'un produit, en correspondance avec le casier concerné.

Selon une définition générale de l'invention, une telle installation comprend, en combinaison:
- dans chaque casier, un détecteur d'absence de colis, réglable en position sur ledit chemin, par rapport à l'avant du casier pour indiquer que le stock de produit atteint un minimum admissible,
- derrière chaque casier, un organe d'affichage, tel qu'un voyant, allumé lorsque le détecteur d'absence de colis est excité;

- des moyens de liaison entre chaque couple détecteur-voyant et au moins une interface, ces moyens de liaison effectuant une indexation prédéterminée des casiers par numéros respectifs,
- un poste central, relié aux interfaces, et comprenant une unité de traitement avec un microprocesseur, au moins une mémoire, une imprimante et des moyens d'alerte,
- la mémoire étant munie d'un tableau qui associe, à chaque interface, et au numéro d'index de chacun des casiers, les indications de l'emplacement de ce casier dans l'installation, de la référence du colis de produit stocké dans ce casier, de la quantité de colis nécessaire pour réapprovisionner le casier et de l'endroit où les colis de ce produit se trouvent en réserve,
- le poste central réagissant au passage à l'état excité de l'un quelconque des détecteurs en faisant produire par l'imprimante une liste imprimée desdites indications relatives au casier correspondant, et en actionnant les moyens d'alerte après impression de cette liste,
ces opérations étant réitérées au bout d'un temps prédéterminé, si l'excitation du détecteur concerné s'est maintenue, par défaut de réapprovisionnement.

Selon un aspect de l'invention, les moyens de liaison sont des concentrateurs, qui comprennent:
- une matrice de codage possédant des fils de ligne et de colonne,
- des optocoupleurs dont chacun a son photodétecteur branché entre un fil de ligne et un fil de colonne de la matrice,
- des liaisons par fils entre chaque couple détecteur-voyant l'optocoupleur correspondant;
- deux circuits numériques l'un décodeur, l'autre multiplexeur reliés respectivement aux fils de ligne et de colonne de la matrice, et
- des liaisons numériques de ces circuits numériques vers le poste central, fournissant à celui-ci les numéros d'index.

Avantageusement, chaque matrice de codage comporte au moins 16 x 8 fils, pour surveiller au moins 128 casiers.

Plus particulièrement, chaque concentrateur comporte une alimentation stabilisée double, en courant continu, à 24 volts et 5 volts.

Selon un autre aspect de l'invention, les concentrateurs sont interconnectés par deux voies en boucles de courant, l'une partant du poste central pour interroger les concentrateurs, l'autre partant de ceux-ci pour renvoyer les informations de détecteur excité vers le poste central

Dans un mode de réalisation préférentiel, chaque détecteur d'absence comprend un support clipsable sur un rail à profil en Omega, courant parallèlement au chemin des colis, muni d'un minirupteur associé à un levier réglable portant un galet faisant saillie, en l'absence de colis, sous l'effet du rappel élastique du minirupteur, le contact de celui-ci étant alors fermé, tandis que la présence d'un colis maintient ce minirupteur à l'état ouvert.

De préférence, aussi, le voyant est directement clipsé sur une goulotte de câblage électrique, permettant aisément la liaison vers le concentrateur.

D'autres caractéristiques et avantages de l'invention apparaîtront à l'examen de la description détaillée ci-après, et des dessins annexés, sur lesquels:

- la figure 1 illustre schématiquement, en élévation, une installation à laquelle peut s'appliquer l'invention;
- la figure 2 est une vue partielle détaillée d'un casier de stockage dynamique muni d'un des éléments de l'invention;
- les figures 3A à 3C sont trois vues, respectivement latérale, en bout et de dessus, montrant l'élément de l'invention illustré sur la figure 2;
- les figures 4A à 4C sont des vues, respectivement en élévation, de côté et de dessus, montrant un autre élément du dispositif selon l'invention;
- la figure 5 est un schéma électrique montrant l'interconnexion des éléments des figures 3 et 4;
- la figure 6A est un schéma électrique montrant l'interconnexion d'un élément selon la figure 5 avec un point d'une matrice selon l'invention;
- la figure 6B est un schéma électrique montrant le reste du branchement de la matrice selon l'invention;
- la figure 7 est le schéma de principe d'un concentrateur selon l'invention;
- la figure 7A est l'organigramme permettant de mieux comprendre le fonctionnement du concentrateur de la figure 7;
- la figure 8 est un schéma de principe montrant l'interconnexion de plusieurs concentrateurs selon l'invention avec un poste central;
- la figure 8A est un schéma détaillant l'interconnexion de l'un des concentrateurs de la figure 8;
- la figure 9 est le schéma de principe du poste central selon l'invention; et
- la figure 9A est un organigramme permettant de mieux comprendre le fonctionnement de ce poste central

Les dessins annexés pourront servir à compléter la description, dans la mesure où l'invention fait intervenir des éléments géométriques, ou d'autres éléments que ces dessins peuvent montrer de façon certaine. Ils pourront donc contribuer à une meilleure compréhension de la description, ainsi qu'à la définition de l'invention.

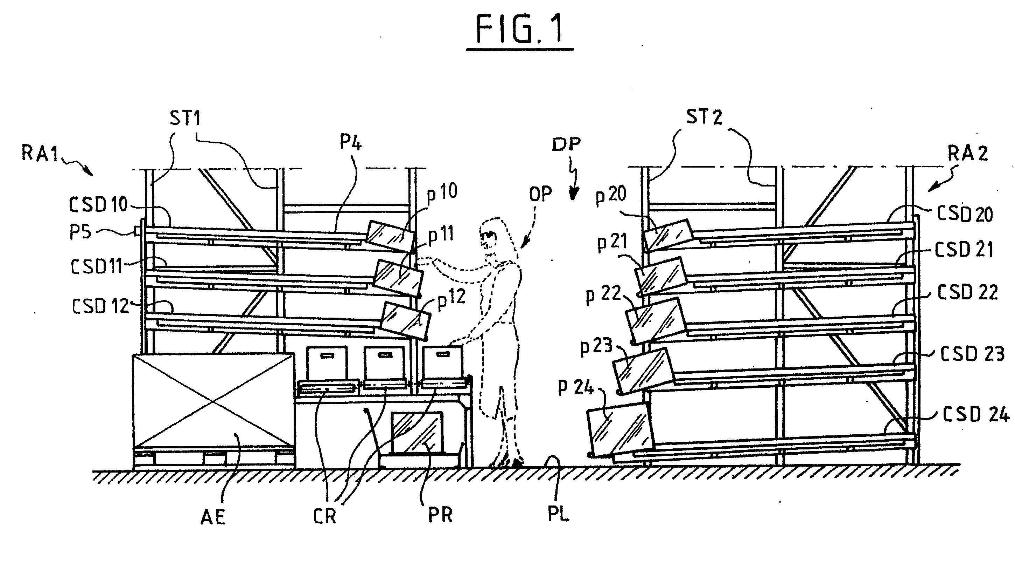

Sur la figure 1, un plancher PL porte plusieurs structures tubulaires ST1 et ST2, entre lesquelles est ménagé un passage de distribution de produit DP.

La structure ST1 comporte des casiers dynamiques CSD10 à CSD12, susceptibles chacun de délivrer par leur extrémité aval, côté DP, des colis respectifs P10 à P12.

L'extrémité amont de ces casiers constitue un passage de réapprovisionnement RA1.

De l'autre côté, la structure ST2 comporte des casiers de stockage dynamique CSD20 à CSD24, délivrant respectivement des colis de produits P20 à P24, et munis à l'arrière d'un autre passage RA2.

Une opératrice OP peut ainsi prélever dans chaque casier des colis correspondant à une commande, et les réunir dans un chariot, ou mieux sur des chemins de roulement tels que CR.

La figure montre encore une imprimante PR, et une armoire électronique AE. Ces éléments peuvent servir dans le cadre d'une "préparation de commandes sans papier", à limiter les actions de l'opératrice à la dépose des colis sur l'un des chemins de roulement CR, qui lui est consacré. En effet, l'armoire électronique AE et l'imprimante PR peuvent alors prendre en charge l'élaboration de l'ensemble des documents écrits requis lors de la préparation de commandes.

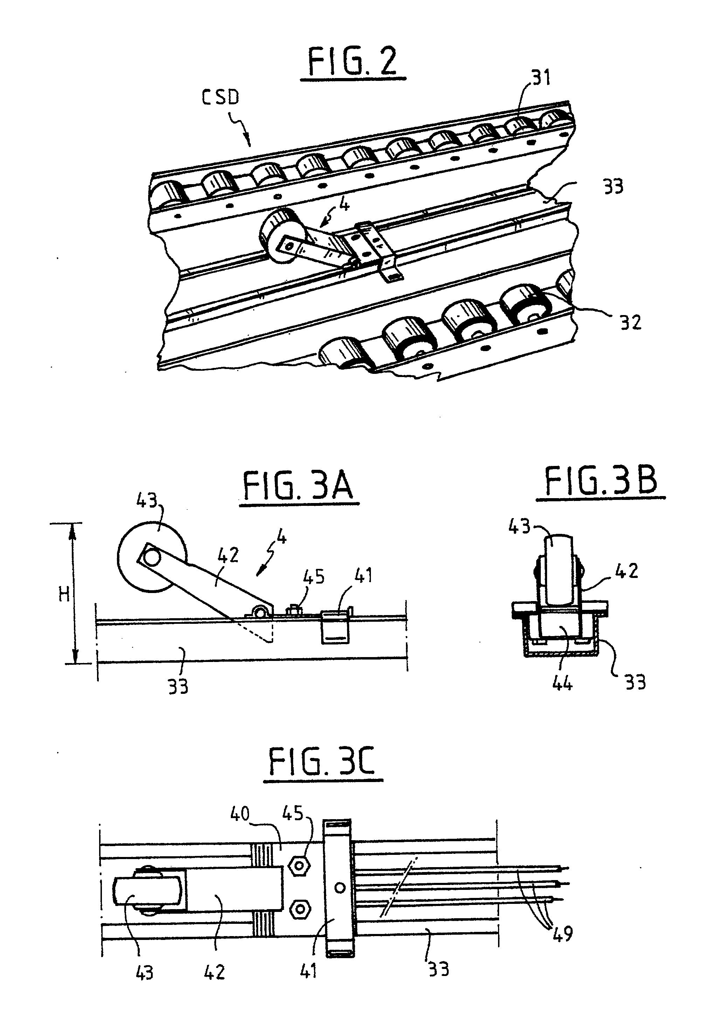

La figure 2 fait mieux apparaître l'un des casiers de stockage dynamique CSD. Celui-ci comporte, entre des cloisons (éventuellement partielles), non représentées, une paire de chemins de roulement tels que 31 et 32 (ou de groupes de tels chemins de roulement). Dans l'axe du bas du casier dynamique est prévu un rail 33, qui est de préférence le rail en omega normalisé des électriciens. Sur ce rail 33 est monté un détecteur d'absence de colis 4, que l'on décrira ci-après en détail aux figures 3A à 3C.

L'homme de l'art aura remarqué que chaque casier dynamique est incliné, de sorte que les colis se déplacent en file, par gravité, afin qu'un colis soit toujours présent du côté du passage DP où officie l'opératrice OP.

Chaque casier dynamique est associé à un colis, c'est-à-dire à un emballage en quantité déterminée d'un produit déterminé. En d'autres termes, on pourra prévoir que le même produit, emballé de manière différente, apparaît dans plusieurs casiers de stockage dynamique.

Le détecteur d'absence des figures 3A à 3C comporte, sur le rail 33, un plateau 40, qui peut être clipsable par une griffe 41 en toute position désirée sur le rail 33. Le plateau 40 supporte à rotation un levier 42, muni à son extrémité d'un galet 43, dont le bord supérieur est à une hauteur H par rapport au bas du rail 33. A l'intérieur du rail, le plateau 40 supporte un minirupteur 44, qui est un minirupteur étanche de protection IP65, inverseur, d'une capacité de 5 ampères sous 220 volts, et qui mesure 23 x 20 x 9 mm.

Des vis 45 permettent de régler le minirupteur 44 en position par rapport au levier 42. La partie non visible de celui-ci vient buter sur le bouton du minirupteur 44, lequel fournit ainsi le rappel élastique propre à maintenir le galet 43 en position haute. Les vis 45 permettent un déplacement du minirupteur 44, et par là le réglage de la position en hauteur du galet 43, dont le dépassement normal au-dessus du plan des galets de stockage dynamique est de 8 mm, la hauteur H étant pour sa part réglable entre 40 et 55 mm. Du minirupteur 44 partent, à l'intérieur du rail 33, trois fils 49 qui vont vers l'extrémité amont du casier de stockage dynamique CSD, c'est-à-dire du côté du passage de réapprovisionnement RA concerné.

La position du plateau 40 est fixée par exemple en un point P4 (figure 1), qui correspond au stock minimum admissible dans ce casier. Ce minimum est défini par l'usager compte-tenu de la cadence de sortie du produit, et du temps nécessaire à son réapprovisionnement. La hauteur du galet, pour sa part, est réglée en fonction du type colis et surtout des rails supports.

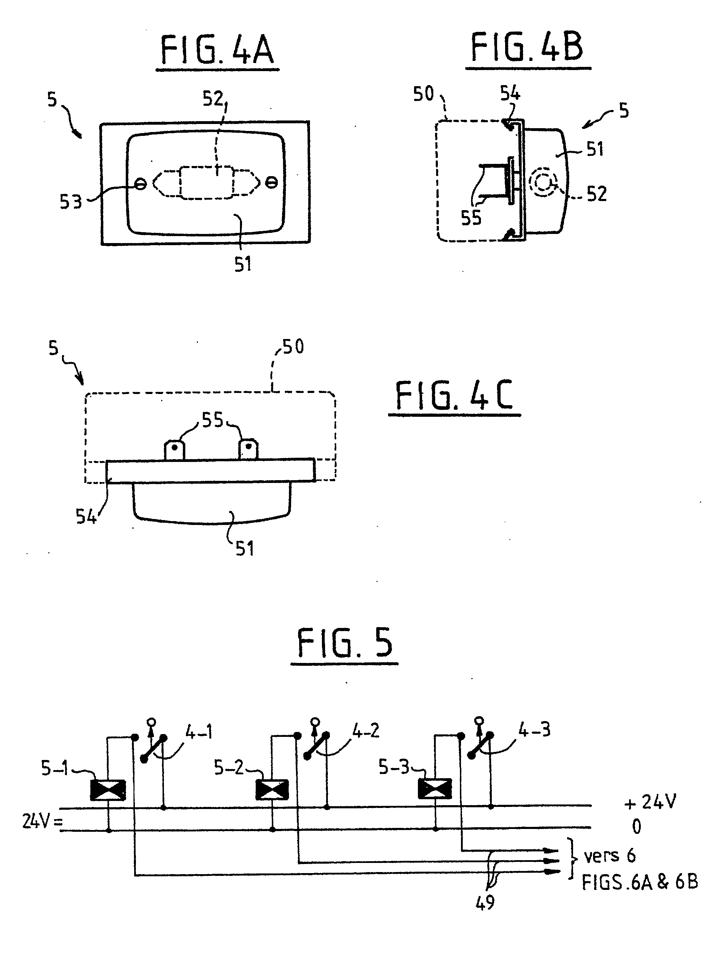

Sur la figure 1, on n'a représenté qu'une seule colonne de casiers, dans les structures ST1 et ST2. Bien entendu, celles-ci comprennent aussi des rangées horizontales de casiers telles que CS10, non visibles. Le long de chacune de ces rangées court une goulotte dont la position est illustrée en P5 sur la figure 1. Cette goulotte support, qui peut être une goulotte de distribution électrique en matière synthétique qualité choc, telle que le modèle GO 43 x 33 c (norme Française PTT), est fermée par son couvercle standard sur toute sa longueur, sauf au niveau de la partie médiane de chaque casier de stockage dynamique. A ce niveau, elle porte un voyant comme illustré sur les figures 4A à 4B.

On voit en 50 le profil de la goulotte. La goulotte est ici fermée par le support 54 du voyant qui vient se clipser sur elle, et recevoir par des vis 53 un diffuseur 51, logeant intérieurement une lampe navette 52, tandis que celle-ci est alimentée par une paire de cosses en laiton étamé à double languette de 6,3 x 0,8 mm.

Le support de lampe est un stratifié de verre époxy d'épaisseur 16/10ème de millimètre, tandis que la lampe peut être du type navette 11 x 39, 3 watts, 24 volts.

La figure 5 montre que, lors du relevage du galet 43 de l'un des détecteurs d'absence 4-1 à 4-3, indiquant l'absence d'un colis à son niveau, un circuit est fermé qui fait fonctionner le voyant correspondant, 5-1 à 5-3, respectivement. L'alimentation s'effectue sous 24 volts continus.

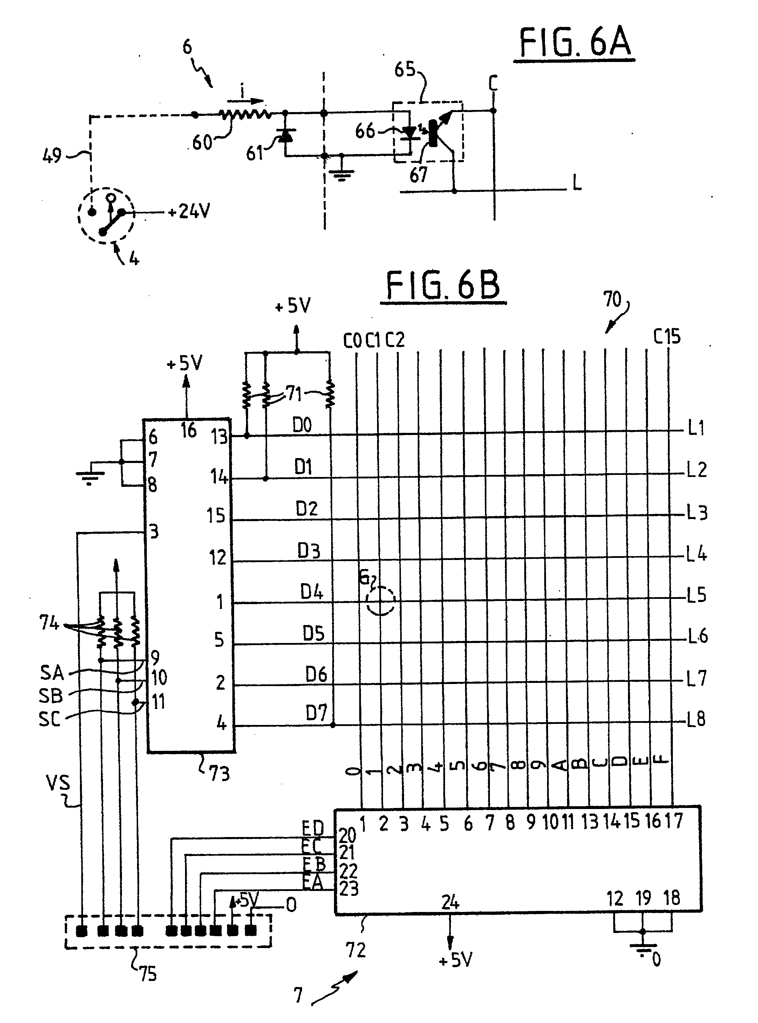

La borne côté voyant de chacun des détecteurs 4-1 à 4-3 est également connectée à un dispositif 6 respectif, que l'on décrira ci-après en référence aux figures 6A et 6B.

Les dispositifs des figures 3 et 4 ont vocation à être présents à raison d'un par casier dynamique de stockage. C'est donc de leurs performances et de leur prix que dépendra la possibilité de les implanter en grand nombre, pour résoudre le problème exposé dans l'introduction de la présente description.

On remarquera à cet égard que ces dispositifs ont été réduits à une combinaison de moyens extrêmement simples, particulièrement propices à l'application visée:

- pour les détecteurs d'absence: support par un rail électrique en omega qui permet également le passage des conducteurs 49; minirupteur qui fournit en même temps le rappel élastique du galet, et le réglage en position verticale de celui-ci, tandis que le réglage en position horizontale est obtenu par clipsage sur le rail électrique.

- Pour les voyants: structure très simple propre à s'insérer directement sur le rail de passage des conducteurs:
. support de lampe en verre époxy;
. doubles cosses qui permettent à la fois des liaisons d'alimentation en 24 volts et les liaisons de transmission vers le dispositif 6 et les autres organes que l'on décrira ci-après.

Sur la figure 6A, on retrouve en 4 l'un des détecteurs d'absence utilisé selon l'invention (bien que, en réalité, la liaison parte du voyant, alimenté par le même détecteur).

Malgré une longueur de fil assez importante, la tension continue de 24 volts peut attaquer directement la diode de l'optocoupleur, à travers une résistance 60 suivie d'une diode 61 montée en inverse, permettant une limitation de la tension aux bornes du montage situé immédiatement en aval.

Ce montage comprend essentiellement un optocoupleur 65 dont la diode électroluminescente 66 est montée entre la masse et le point commun de la résistance 60 et de la diode 61. Le phototransistor 67 est monté entre une ligne L et une colonne C d'une matrice 70 que l'on décrira maintenant.

Sur la figure 6B, la matrice 70 comprend huit lignes L1 à L8, mais que l'on notera également D0 à D7 pour mieux comprendre leurs fonctions logiques.

La matrice comprend également 16 colonnes, C0 à C15 (ou 0 à F, en hexadécimal).

Les huit fils de lignes D0 à D7 sont reliés à une tension continue de + 5 volts par des résistances 71. Chacune de ces résistances va ainsi pouvoir alimenter le collecteur de l'ensemble des phototransistors 67 reliés à cette ligne.

Les émetteurs des phototransistors sont à chaque fois reliés aux fils de colonnes correspondants.

La matrice est munie d'un connecteur 75, dont quatre broches commandent un décodeur 72, lequel répond aux quatre bits d'entrée EA, EB, EC, ED en mettant à la masse celles des colonnes C0 à C15 dont le numéro correspond au nombre défini par ces quatre bits d'entrée.

Si aucun des détecteurs d'absence associé à la colonne correspondante n'est excité, aucun des phototransistors 67 correspondant n'est conducteur. On aura par conséquent des tensions positives sur toutes les lignes D0 à D7.

Si au contraire l'un des détecteurs d'absence est excité, l'un des phototransistors 67 est conducteur, et par conséquant la ligne correspondante parmi D0 à D7 va se trouver à un potentiel voisin de la masse.

Eventuellement, plusieurs phototransistors associés à la colonne en cours de scrutation sont conducteurs, et plusieurs lignes sont simultanément mises à la masse.

Le multiplexeur 73 interroge en séquence les lignes, en réponse à trois bits SA, SB, SC venant du connecteur 75. L'information obtenue est fournie sur la sortie VS, vers le connecteur 75.

Physiquement, le dispositif des figures 6A et 6B peut être construit d'une manière simple, par superposition à trois niveaux, d'une part de la matrice, d'autre part d'un plan de optocoupleurs 65, qui peuvent être avantageusement un modèle à quatre sorties, de format réduit, tel que le modèle TLP 521-1 de la société Toshiba, et enfin sur un troisième plan, les diodes 61 et résistances 60 avec les 16 connecteurs industriels à 8 points. On réalise ainsi une galette compacte, particulièrement adaptée à la mise en oeuvre de l'invention.

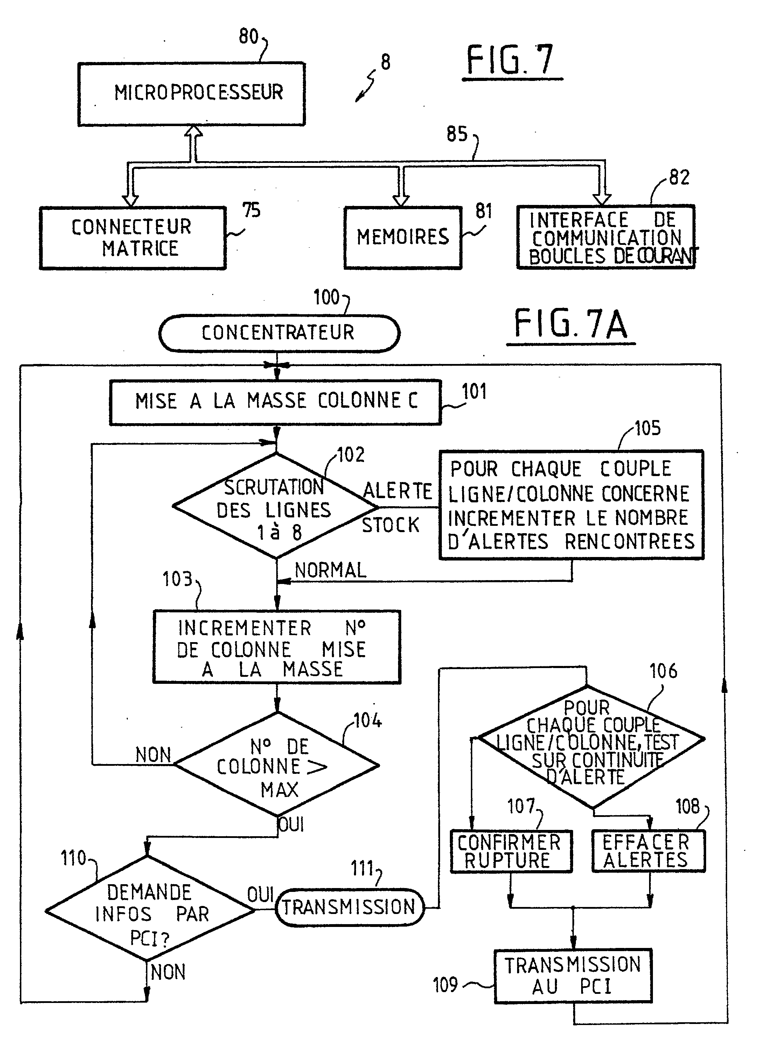

La figure 7 illustre le schéma de principe d'un concentrateur, propre à être relié à une matrice telle qu'illustrée sur la figure 6B.

Chaque concentrateur comprend un microprocesseur 80, relié par un bus 85 au connecteur de chaque matrice 75, à des mémoires 81, ainsi qu'à un double port 82 de communication sur lequel on reviendra plus loin.

Le microprocesseur peut ainsi interroger chaque casier, à travers la matrice qu'il contrôle, avec les quatre bits EA à ED et les trois bits SA à SC. On établit autant que possible une correspondance entre les lignes et colonnes de la matrice et la disposition physique des casiers, en principe par niveaux.

On obtient ainsi une représentation directe, numérique, de la situation d'un détecteur d'absence excité à l'intérieur de la partie de l'installation de stockage qui est contrôlée par la matrice et le concentrateur dont il s'agit.

La figure 7A illustre sous forme d'organigramme le fonctionnement d'un tel concentrateur, à partir d'une étape initiale 100.

L'étape 101 consiste à mettre à la masse la colonne C0.

L'étape 102 consiste à scruter les lignes 1 à 8. Dans le cas où aucune alerte n'est donnée on passe directement à l'étape 103 qui incrémente le numéro de colonne mis à la masse; l'étape 104 vérifie si l'on on a ou non atteint le maximum. Et s'il reste encore des colonnes à explorer, on retourne à l'étape 102.

Si la sortie du test 102 indiquait au contraire au moins une réponse, c'est-à-dire un détecteur d'absence excité, l'étape 105 va alors mémoriser le nombre d'alertes rencontrées pour le numéro de colonne concerné et le numéro de ligne D du détecteur d'absence ayant répondu.

Lorsque le test de l'étape 104 a montré que l'on a exploré complètement les colonnes, l'étape 110 détermine si le poste central (décrit plus loin) a demandé des informations. Si oui, une branche 111 va procéder à la transmission de ces informations. (Le passage à cette branche peut aussi être systématique, sauf bien sûr pour la phase de transmission proprement dite).

Une étape 106 détermine si cette réponse est répétée d'une manière prédéterminée, dans le but d'éviter la prise en compte de signaux erratiques. Cela peut se faire:
- soit par exemple en ne prenant en compte une réponse que si elle s'est répétée X fois consécutivement;
- soit encore en ne prenant en compte une réponse que si elle s'est répétée constamment ou quasi-constamment pendant un intervalle de temps prédéterminé.

Suivant le résultat du test 106, une étape 107 va enregistrer la rupture de stock en mémoire, ou une étape 108 va au contraire effacer les informations correspondantes, mémorisées en 103.

La transmission 109 porte sur les informations confirmées en 107. Après cette transmission d'informations, ou par la sortie NON du test 110, on retourne à l'étape 101.

Ainsi, chaque concentrateur va surveiller seize fois huit, soit 128 casiers de stockage dynamique, et déterminer en permanence ceux de ces casiers de stockage dynamique dont le stock qu'ils contiennent atteint la valeur minimale admissible. On notera qu'en même temps, le voyant associé à chaque casier se trouvera allumé.

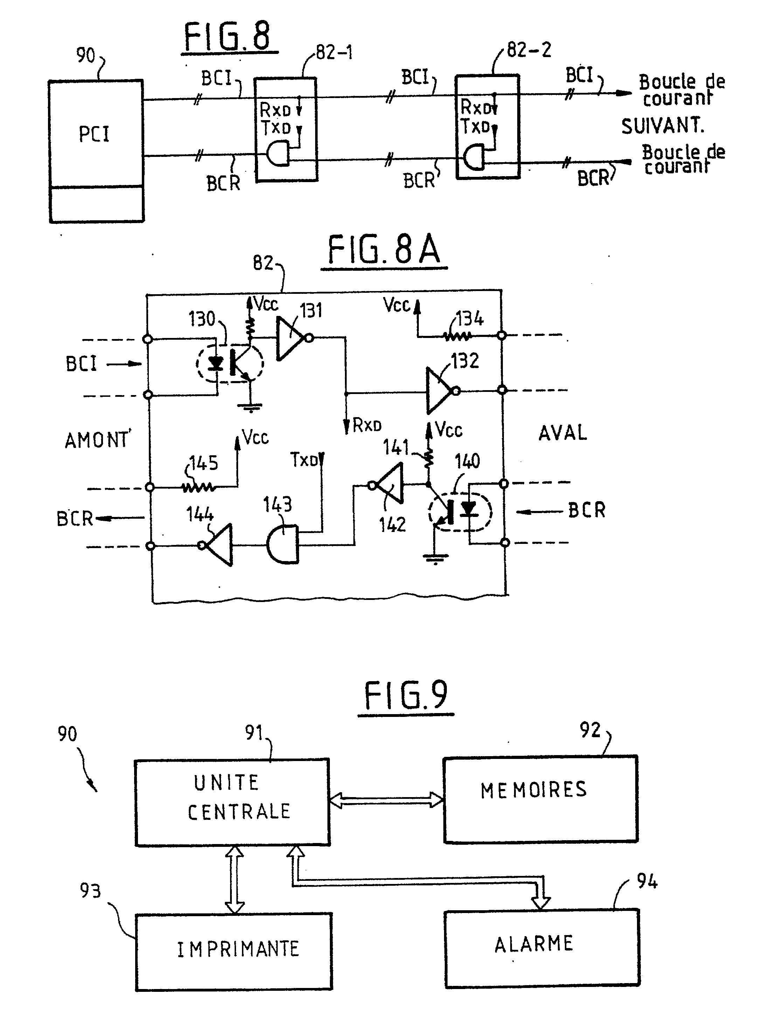

La figure 8 illustre une interconnexion par boucle de courant entre un poste central PCI, référencé 90, et différents ports ou interfaces de communication 82-1, 82-2, etc, de concentrateurs tels que celui de la figure 7.

Plus précisément, il existe une boucle de courant d'interrogation, partant du poste central 90 pour passer successivement par les différents concentrateurs, et transmettre à ceux-ci le signal d'interrogation que l'on note habituellement RXD. Ce signal comporte l'ordre d'interrogation lui-même, accompagné de l'adresse du concentrateur concerné, vu du poste central PCI.

Dans l'autre sens, une boucle de courant de réponse BCR part du dernier concentrateur, pour remonter ceux-ci jusqu'à 82-2, 82-1, pour atteindre enfin le poste central 90. Par des fonctions logiques ET, cette boucle de courant de réponse peut soit transmettre le signal de réponse TXD d'un concentrateur précédent, soit celui du concentrateur concerné, deux concentrateurs ne pouvant ainsi répondre en même temps.

La structure d'un boîtier 82 est illustrée plus en détail sur la figure 8A. On voit qu'il comporte sur l'entrée de la boucle de courant d'interrogation un optocoupleur 130, dont le transistor de sortie a son émetteur à la masse et son connecteur relié d'une part par une résistance à la tension VCC habituelle, d'autre part par un amplificateur écrêteur inverseur 131 à l'entrée RXD du concentrateur local, et aussi par un autre amplificateur inverseur 132 à la suite de la boucle de courant BCI vers le concentrateur suivant, suite dont l'autre fil est défini par une liaison à travers une résistance 134 à la tension VCC.

Dans l'autre sens, la boucle de courant BCR attaque elle aussi un optocoupleur 140 dont le phototransistor de sortie a son émetteur à la masse et son collecteur relié par une résistance 141 à la tension VCC, ainsi que par un amplificateur écrêteur inverseur 142 à une porte ET 143 dont l'autre entrée reçoit le signal TXD issu du concentrateur local. La sortie de la porte ET 143 est reliée par un amplificateur inverseur 144 à l'un des fils de la boucle de courant de réponse BCR qui se poursuit, tandis que l'autre fil de celle-ci est défini par la liaison d'une résistance 145 à la tension VCC.

Ainsi, celui des concentrateurs qui possède l'adresse définie par le signal RXD va répondre, tandis que les autres resteront muets, d'où le rôle des portes ET telles que 143.

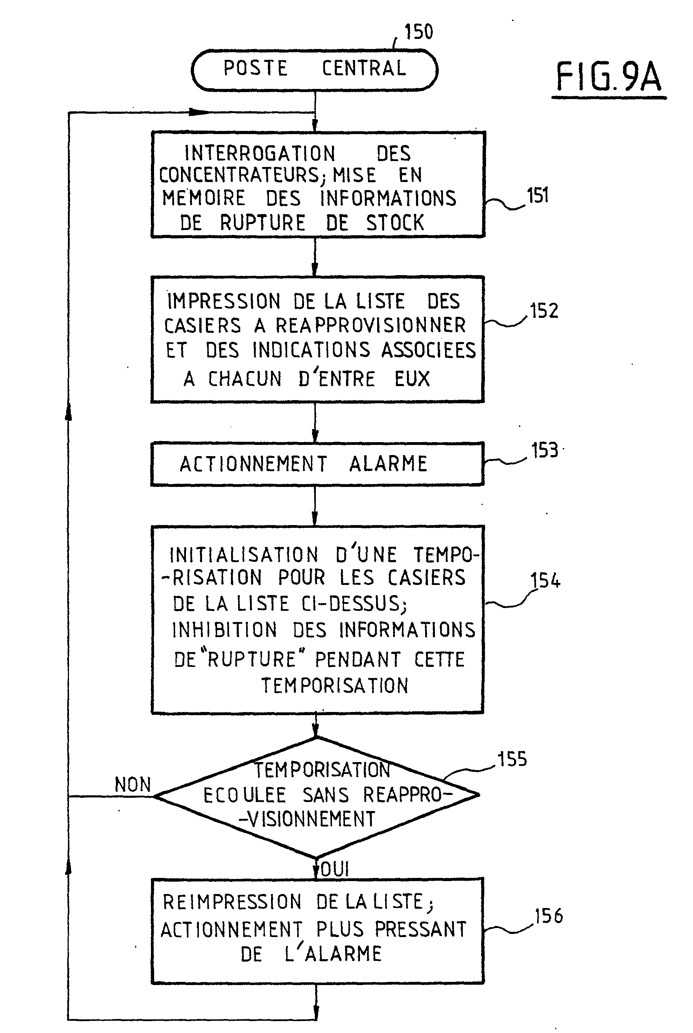

On se tournera maintenant vers la figure 9 qui décrit le schéma de principe d'un poste central 90, lequel comporte une unité centrale 91 associée à des mémoires 92, à une imprimante 93, ainsi qu'à une sirène 94.

La façon d'interconnecter l'unité centrale 91 à de tels organes est connue de l'homme de l'art, et ne nécessite pas une description détaillée.

La figure 9A illustre la façon dont fonctionne ce poste central 90. A partir de l'étape initiale 150, une étape 151 procède à l'interrogation séquentielle des concentrateurs, en donnant à chaque fois un signal RXD défini par l'ordre d'interrogation et l'adresse du concentrateur concerné. Cette même étape consiste à mettre en mémoire les informations de rupture de stock que fournit en réponse le concentrateur interrogé.

Après que tous les concentrateurs aient été interrogés, une étape 152 consiste en l'impression de la liste des casiers à réapprovisionner, et des indications associées à chacun d'entre eux.

On notera ici que ces indications comprennent avantageusement:
- une indication pour l'opérateur de réapprovisionnement, relative à l'emplacement du casier dans l'installation de distribution;
- la référence du colis de produit stocké dans ce casier, et qu'il faut réapprovisionner;
- la quantité de colis nécessaires pour réapprovisionner complètement ou quasi-complètement le casier de stockage dynamique concerné;
- l'endroit où les colis de ce produit se trouvent dans le stock de réserve;
- de préférence, le temps de réapprovisionnement.

Bien entendu, on pourrait aussi prévoir d'autres prestations, comme l'établissement automatique de bons de transfert de ces colis entre l'entrepôt et l'installation de stockage dynamique.

Après l'achèvement de cette étape 152, l'étape 153 consiste en l'actionnement d'une alarme sonore et/ou lumineuse propre à signaler au personnel qu'il faut réapprovisionner.

L'étape 154 consiste ensuite à initialiser une temporisation, définie compte-tenu du temps moyen de réapprovisionnement (en principe disponible en mémoire). Pendant cette temporisation, les informations d'alerte (l'existence d'un stock insuffisant dans les casiers concernés) sont inhibées, et ce jusqu'à la fin de la temporisation.

L'étape 155 détermine si la temporisation est écoulée pour les casiers qui ont déjà fait l'objet d'une impression de liste. Si la temporisation est écoulée sans que le réapprovisionnement n'ait eu lieu, la liste est imprimée à nouveau à l'étape 156, et l'alarme est actionnée à nouveau, de préférence de façon plus pressante.

Dans l'autre sortie du test 155, ou après l'opération 156, on retourne à l'étape 151.

Bien entendu, les opérations de la figure 9A n'utiliseront le poste central PCI que d'une manière limitée. Ce poste central peut naturellement procéder à de nombreuses autres interventions relatives à la gestion du stock de produits.

Dans un mode de réalisation particulier de l'invention, chaque concentrateur vérifie que le changement d'état d'un détecteur d'absence est définitif en le testant pendant une durée réglable de 5 à 10 secondes. La temporisation observée par le poste central avant de répéter l'impression est d'une durée beaucoup plus longue, de l'ordre d'une demi-heure au moins.

Par ailleurs, il est possible de commander au poste central d'ignorer totalement un emplacement de casier, lorsqu'on est par exemple en rupture d'approvisionnement pour une large durée.

**Revendications**

1. Installation industrielle de stockage et de distribution de produits à grande échelle, du type comportant, dans un local, des rangées (ST1, ST2) de moyens de stockage possédant une face avant tournée vers un passage (DP) de distribution des produits stockés, et une face arrière permettant le réapprovisionnement en produits stockés (RA1, RA2), les moyens de stockage eux-mêmes consistant en un arrangement, bidimensionnel en particulier, de casiers de stockage dynamique (CSD) dont chacun se présente comme un couloir quie possède un chemin (31, 32) propre à transporter par gravité, de l'arrière vers l'avant, en file, des colis (P) contenant chacun une quantité prédéterminée d'un produit, en correspondance avec le casier concerné, caractérisé en ce qu'elle comprend, en combinaison:

- dans chaque casier (CSD), un détecteur (4) d'absence de colis, réglable en position sur ledit chemin par rapport à l'avant du casier, pour indiquer que le stock de produit atteint un minimum admissible,
- derrière chaque casier, un organe d'affichage (5), tel qu'un voyant, allumé lorsque le détecteur d'absence de colis est excité,
- des moyens de liaison (7, 8) entre chaque couple détecteur-voyant et au moins une interface (82), ces moyens de liaison effectuant une indexation prédéterminée des casiers par numéros respectifs,
- un poste central (90) relié aux interfaces, et comprenant une unité de traitement (91) avec un microprocesseur, au moins une mémoire (92), une imprimante (93) et des moyens d'alerte (94), la mémoire (92) étant munie d'un tableau qui associe, à chaque interface, et au numéro d'index de chacun des casiers, les indications de l'emplacement de ce casier dans l'installation, de la référence du colis de produit stocké dans ce casier, de la quantité de colis nécessaire pour réapprovisionner le casier et de l'endroit où les colis de ce produit se trouvent en réserve,
- le poste central (90) réagissant au passage à l'état excité de l'un quelconque des détecteurs (4) en faisant produire par l'imprimante une liste imprimée desdites indications relatives au casier correspondant, et en actionnant les moyens d'alerte après impression de cette liste,
ces opérations étant réitérées au bout d'un temps prédéterminé, si l'excitation du détecteur concerné s'est maintenue, par défaut de réapprovisionnement.

2. Installation selon la revendication 1, caractérisée en ce que les moyens de liaison (7, 8) sont des concentrateurs qui comprennent:
- une matrice de codage (70) possédant des fils de ligne et de colonne,
- des optocoupleurs (65) dont chacun a son photodétecteur branché entre un fil de ligne et un fil de colonne de la matrice,
- des liaisons par fils (49) entre chaque couple détecteur-voyant et l'optocoupleur correspondant,
- deux circuits numériques l'un un décodeur (72), l'autre multiplexeur (73) reliés respectivement aux fils de ligne et de colonne de la matrice, et
- des liaisons numériques (75) de ces circuits numériques vers le poste central, fournissant à celui-ci les numéros d'index.

3. Installation selon la revendication 2, caractérisée en ce que chaque matrice de codage (70) comporte au moins 16 x 8 fils, pour surveiller au moins 128 casiers.

4. Installation selon l'une des revendications 3 et 4, caractérisée en ce que chaque concentrateur (80) comporte une alimentation stabilisée double, en courant continu, à 24 volts et 5 volts.

5. Installation selon l'une des revendications 2 à 4, caactérisée en ce que les concentrateurs (80) sont interconnectés par deux voies en boucles de courant (BCI, BCR), l'une (BCI) partant du poste central pour interroger les concentrateurs, l'autre (BCR) partant de ceux-ci, pour renvoyer les informations de détecteur excité vers le poste central.

6. Installation selon l'une des revendications 2 à 5, caractérisée en ce que chaque détecteur d'absence (4) comprend un support (40) clipsable sur un rail à profil en omega (33), courant parallèlement au chemin des colis, muni d'un minirupteur (44) associé à un levier réglable (42) portant un galet (43) faisant saillie, en l'absence de colis, sous l'effet du rappel élastique du minirupteur, le contact de clui-ci étant alors fermé, tandis que la présence d'un colis maintient ce minirupteur à l'état ouvert.

7. Installation selon l'une des revendications 2 à 6, caractérisée en ce que le voyant (5) est directement clipsé sur une goulotte (50) de câblage électrique, permettant aisément la liaison vers le concentrateur.

## Claims

1. An industrial installation for storing and delivering goods on a large scale, the installation being of the type comprising, in premises, rows (ST1, ST2) of storage means having respective front faces facing at least one passage (DP) for delivering stored goods, and respective rear faces (RA1, RA2) for refilling with stored goods, the storage means themselves consisting in an arrangement, in particular a twodimensional arrangement, of dynamic storage racks (CSD) each in the form of a passage having a part (31, 32) suitable for transporting a line of cases (P) from rear to front and under gravity, each case containing a predetermined quantity of goods corresponding to the rack in question, the installation being characterized in that it comprises, in combination:

a case-absence detector (4) in each rack (CSD) and adjustable in position on said path relative to the front of the rack in order to indicate when the stock of goods reaches a minimum acceptable level;

a display member (5) such as a lamp disposed at the rear of each rack and activated when the case-absence detector is excited;

connection means (7, 8) connecting each detector-lamp pair with at least one interface (82), said connection means performing predetermined indexing of the racks by means of respective numbers;

a central station (90) connected to the interfaces and including a processor unit (91) including a microprocessor, at least one memory (92), a printer (93), and alarm means (94), the memory (92) being provided with a table which associates each interface and each rack index number with indications concerning the location of the rack in the installation, the reference of the goods case stored in the rack, the quantity of cases required for refilling the rack, and the location where cases of the goods are to be found;

the central station (90) responding to any of the detectors (4) which include the excited state by causing the printer to produce a printed list of said indications relating to the corresponding rack, and by actuating warning means after printing said list, these operations being repeated after a predetermined length of time if the detector concerned continues to be excited due to lack of refilling.

2. An installation according to claim 1, characterized in that the connection means (7, 8) are concentrators comprising:

an encoding matrix (70) having line and column wires;

optocouplers (65) each having its photodetector connected between one line wire and one column wire in the matrix;

wire connections (49) between each detector-lamp pair and the corresponding optocoupler;

two digital circuits, comprising a decoder (72) and a multiplexer (73) respectively connected to the line wires and to the column wires of the matrix; and

digital connections (75) between said digital circuits and the central station, serving to provide the central station with the index numbers.

3. An installation according to claim 2, characterized in that each encoding matrix (70) includes at least 16 x 8 wires, in order to monitor at least 128 racks.

4. An installation according to any one of claims 3 and 4, characterized in that each concentrator (80) includes a power supply for providing stabilized D.C. outputs both at 24 volts and at 5 volts.

5. An installation according to any one of claims 2 to 4, characterized in that the concentrators (80) are interconnected by two current loop paths (BCI, BCR), one or which (BCI) runs from the central station to interrogate the concentrators and, the other of which (BCR) runs from the concentrators to return information concerning excited detectors to the central station.

6. An installation according to any one of claims 2 to 5, characterized in that each absence detector (4) comprises a support (40) which is snap-fastenable to a rail (33) having an omega-shaped section, and running parallel to each case path, the support being provided with a microswitch (44) associated with an adjustable lever (42) carrying a wheel (43) which projects, in the absence of a case, and under the effect of the resilient return force of the microswitch, thereby closing its contact, whereas when a case is present, the microswitch is maintained in the open state.

7. An installation according to any one of claims 2 to 6, characterized in that the lamp (5) is snap-fastened directly to an electric cabling slot (50), thereby facilitating connection with the concentrator.

## Patentansprüche

1. Grossanlage zur industriellen Lagerung und Stückgutverteilung, die in einem Raum Reihen (ST1, ST2) von Lagerungsmitteln umfasst, deren Vorderseite einem Durchgang (DP) zur Verteilung der gelagerten Erzeugnisse zugewandt ist und deren Rückseite die Wiederversorgung mit gelagerten Erzeugnissen (RA1, RA2) gestattet, wobei die Lagerungsmittel selbst aus einer insbesondere bidimensionalen Anordnung dynamischer Lagergestelle (CSD) bestehen, von denen jedes in Form eines mit einer Bahn (31, 32) versehenen Ganges ausgebildet ist, auf der jeweils eine vorbestimmte Menge eines Erzeugnisses enthaltende Pakete (P) in Übereinstimmung mit dem betreffenden Lagergestell in Reihe durch Schwerkraft von hinten nach vorn befördert werden können, dadurch gekennzeichnet, dass in Verbindung miteinander

– in jedem Lagergestell (CSD) ein die Abwesenheit von Paketen anzeigender Detektor (4) angeordnet ist, dessen Position auf der vorgenannten Bahn im Verhältnis zur Vorderkante des Lagergestells einstellbar ist, um anzuzeigen, dass der Erzeugnisvorrat einen zulässigen Mindestwert erreicht;

– hinter jedem Lagergestell ein Anzeigeorgan (5), zum Beispiel eine Kontrollampe, angeordnet ist, die aufleuchtet, wenn der Paketabwesenheitsdetektor erregt ist;

– Verbindungsmittel (7, 8) zwischen jedem Detektor-Kontrollampen-Paar und wenigstens einer Schnittstelle (82) vorgesehen sind, wobei diese Verbindungsmittel eine vorbestimmte Indexierung der Lagergestelle mit den jeweiligen Nummern vornehmen;

– eine Zentralstelle (90) vorgesehen ist, die mit den Schnittstellen verbunden ist und eine Verarbeitungseinheit (91) mit einem Mikroprozessor, mindestens einen Speicher (92), einen Drucker (93) und Alarmeinrichtungen (94) umfasst, wobei der Speicher (92) mit einer Tabelle ausgestattet ist, die jeder Schnittstelle und der Kennummer jedes Lagergestells die Angaben bezüglich der Stelle dieses Lagergestells innerhalb der Anlage, der Referenz des in diesem Lagergestell gelagerten Erzeugnispaketes, der für die Neuversorgung des Lagergestelles erforderlichen Menge von Paketen und der Stelle, an der die Pakete dieses Erzeugnisses in Vorrat gehalten werden, zuordnet;

– die Zentralstelle (90) auf den Durchgang eines beliebigen Detektors (4) im erregten Zustand reagiert, indem sie den Drucker zum Auflisten der das entsprechende Lagergestell betreffenden Angaben ansteuert und nach dem Ausdrucken dieser Liste die Alarmeinrichtungen betätigt, wobei diese Vorgänge nach einer vorbestimmten Zeit wiederholt werden, wenn die Erregung des betroffenen Detektors in Ermangelung einer Neuversorgung aufrechterhalten wird.

2. Anlage nach Anspruch 1, dadurch gekennzeichnet, dass die Verbindungsmittel (7, 8) Konzentratoren sind, welche die folgenden Elemente umfassen:

– eine Codematrix (70) mit Zeilen- und Spaltendrähten;

– optoelektronische Koppelelemente (65), von denen jedes seinen Photoempfänger besitzt, der zwischen einem Zeilendraht und einem Spaltendraht der Matrix angeschaltet ist;

– Verbindungsdrähte (49) zwischen jedem Detektor-Kontrollampen-Paar und dem entsprechenden optoelektronischen Koppelelement;

– zwei numerische Schaltkreise, deren einer ein Decodierer (72) und deren anderer ein Multiplexer (73) ist, die jeweils mit den Zeilen- und Spaltendrähten der Matrix verbunden sind, und

– numerische Verbindungen (75) dieser numerischen Schaltkreise zur Zentralstelle, die dieser letzteren die Kennummern übermitteln.

3. Anlage nach Anspruch 2, dadurch gekennzeichnet, dass jede Codematrix (70) wenigstens 16 x 8 Drähte für die Überwachung von wenigstens 128 Lagergestellen umfasst.

4. Anlage nach einem der vorstehenden Ansprüche 3 und 4, dadurch gekennzeichnet, dass jeder Konzentrator (80) eine doppelte stabilisierte Gleichstromversorgung von 24 Volt und 5 Volt umfasst.

5. Anlage nach einem der vorstehenden Ansprüche 2 bis 4, dadurch gekennzeichnet, dass die Konzentratoren (80) durch zwei Stromschleifen (BCI, BCR) miteinander verbunden sind, von denen die eine (BCI) von der Zentralstelle zum Abfragen der Konzentratoren und die andere (BCR) von diesen ausgeht, um die Informationen des erregten Detektors an die Zentralstelle zurückzugeben.

6. Anlage nach einem der vorstehenden Ansprüche 2 bis 5, dadurch gekennzeichnet, dass jeder Abwesenheitsdetektor (4) einen Träger (40) aufweist, der an eine Schiene mit Omega-Profil (33) angeklemmt werden kann, die parallel zur Paketbahn verläuft, mit einem Mikroschalter (44) versehen ist, der einem einstellbaren Hebel (42) zugeordnet ist, der eine Rolle (43) trägt, die bei Fehlen von Paketen unter der elastischen Rückholwirkung des Mikroschalters vorsteht, wobei der Kontakt dieses letzteren alsdann geschlossen ist, während die Anwesenheit eines Paketes diesen Mikroschalter in geöffnetem Zustand hält.

7. Anlage nach einem der vorstehenden Ansprüche 2 bis 6, dadurch gekennzeichnet, dass die Kontrollampe (5) unmittelbar an eine Kabelwanne (50) angeklemmt ist und somit eine bequeme Verbindung mit dem Konzentrator gestattet.

## FIG.1

# FIG. 2

# FIG. 3A

# FIG. 3B

# FIG. 3C

# FIG.4A

# FIG.4B

# FIG.4C

# FIG.5

vers 6
FIGS.6A & 6B

FIG. 6A

FIG. 6B

## FIG. 7

80

MICROPROCESSEUR

8

CONNECTEUR MATRICE — 75

85

MEMOIRES — 81

INTERFACE DE COMMUNICATION BOUCLES DE COURANT — 82

## FIG. 7A

100 — CONCENTRATEUR

101 — MISE A LA MASSE COLONNE C

102 — SCRUTATION DES LIGNES 1 à 8

ALERTE STOCK → 105 — POUR CHAQUE COUPLE LIGNE/COLONNE CONCERNE INCREMENTER LE NOMBRE D'ALERTES RENCONTREES

NORMAL

103 — INCREMENTER N° DE COLONNE MISE A LA MASSE

104 — N° DE COLONNE > MAX

NON

OUI

106 — POUR CHAQUE COUPLE LIGNE/COLONNE, TEST SUR CONTINUITE D'ALERTE

107 — CONFIRMER RUPTURE

108 — EFFACER ALERTES

110 — DEMANDE INFOS PAR PCI?

OUI — 111 — TRANSMISSION

NON

109 — TRANSMISSION AU PCI

EP 0 236 191 B1

## FIG.8

## FIG.8A

## FIG.9

**FIG.9A**

POSTE CENTRAL — 150

INTERROGATION DES CONCENTRATEURS; MISE EN MEMOIRE DES INFORMATIONS DE RUPTURE DE STOCK — 151

IMPRESSION DE LA LISTE DES CASIERS A REAPPROVISIONNER ET DES INDICATIONS ASSOCIEES A CHACUN D'ENTRE EUX — 152

ACTIONNEMENT ALARME — 153

INITIALISATION D'UNE TEMPO-RISATION POUR LES CASIERS DE LA LISTE CI-DESSUS; INHIBITION DES INFORMATIONS DE "RUPTURE" PENDANT CETTE TEMPORISATION — 154

TEMPORISATION ECOULEE SANS REAPPRO-VISIONNEMENT — 155

NON

OUI

REIMPRESSION DE LA LISTE; ACTIONNEMENT PLUS PRESSANT DE L'ALARME — 156